# EUROPEAN PATENT SPECIFICATION

(11) **EP 3 611 130 B1**
(45) Date of publication and mention of the grant of the patent: **14.12.2022**
(21) Application number: 18784925.2
(22) Date of filing: 26.02.2018
(51) Int. Cl.: C01B 32/184, C01B 32/198, C01B 32/192

(54) **PREPARATION METHOD FOR A FLEXIBLE GRAPHENE FILM**
HERSTELLUNGSVERFAHREN FÜR EINEN FLEXIBLEN GRAPHENFILM
MÉTHODE DE PRÉPARATION D'UN FILM DE GRAPHÈNE FLEXIBLE

(30) Priority: 11.04.2017 CN 201710232564; 11.04.2017 CN 201710232708
(43) Date of publication of application: 19.02.2020
(73) Proprietor: Hangzhou Gaoxi Technology Co., Ltd., Zhejiang 311113 (CN)
(72) Inventor: GAO, Chao, Hangzhou Zhejiang 311113 (CN); XU, Zhen, Hangzhou Zhejiang 311113 (CN); XIAO, Youhua, Hangzhou Zhejiang 311113 (CN)
(74) Representative: Murgitroyd & Company
(86) International application number: PCT/CN2018/077171
(87) International publication number: WO 2018/188420

(56) References cited:
- EP-A1- 2 412 670
- WO-A1-2015/150791
- CN-A- 105 523 547
- CN-A- 105 731 435
- CN-A- 106 185 903
- CN-A- 106 986 335
- CN-A- 107 055 517
- CN-A- 107 151 835
- US-A1- 2017 021 387
- DATABASE WPI Week 201658 Thomson Scientific, London, GB; AN 2016-26825B XP002797972, -& CN 105 523 547 A (UNIV ZHEJIANG) 27 April 2016 (2016-04-27) & US 2019/023575 A1 (GEO CHAO [CN] ET AL) 24 January 2019 (2019-01-24)
- DATABASE WPI Week 201671 Thomson Scientific, London, GB; AN 2016-43217V XP002797973, -& CN 105 731 435 A (ZHEJIANG TANGU SHANGXI MATERIAL TECHNOLO) 6 July 2016 (2016-07-06)
- JUN-ICHI FUJITA ET AL: "Fabrication of Large-Area Graphene Using Liquid Gallium and Its Electrical Properties", JAPANESE JOURNAL OF APPLIED PHYSICS, JAPAN SOCIETY OF APPLIED PHYSICS, JP, vol. 49, no. 6, 1 June 2010 (2010-06-01), pages 6GC01-1, XP001556951, ISSN: 0021-4922, DOI: 10.1143/JJAP.49.06GC01

## Description

### BACKGROUND OF THE PRESENT INVENTION

### Field of Invention

The present invention relates to the field of nanomaterial preparation, and particularly to a method for preparing a flexible graphene film.

### Description of Related Arts

In 2010, Andre Geim and Konstantin Novoselov won the Nobel Prize in Physics for their first demonstration of the existence of two-dimensional graphene and its excellent properties.

Graphene is a two-dimensional single-atom layer honeycomb periodic lattice structural crystal composed of carbon atoms in a form of sp² hybrid orbits. It has an excellent electrical property (for example, its electron mobility at room temperature is up to 2×10⁵ cm²/Vs), an outstanding thermal conductivity of 5000 W/MK, an extraordinary specific surface area of 2630 M²/g, a Young's modulus of 1100 GPa and a breaking strength of 125 GPa. The electrical and thermal conductivity of graphene is better than that of metals. At the same time, graphene has advantages of high temperature and corrosion resistance, and it has the potential to replace metals in the field of electrothermal materials due to good mechanical properties and low density.

The graphene film is a macroscopic application form of graphene. However, macroscopic folds of most of the current flexible graphene films are based on the shrinkage of the stretched polymer substrate, or the corresponding graphene film is prepared based on the surface structure of the substrate, which means that the macroscopic graphene film is unable to be obtained by controlling the state of the graphene monolith and the fluctuations are not spontaneously generated.

Chinese patent specification number CN 105523547 A describes a graphene film with ultrahigh flexibility and high thermal conductivity, and a preparation method of this graphene film.

Chinese patent specification number CN 105731435 A describes a high-strength flexible graphene composite heat conduction film, and a preparation method of this film.

US patent publication number US2017/021387 A1 describes a process for producing a highly oriented graphene oxide film.

The scientific publication entitled "Fabrication of Large-Area Graphene Using Liquid Gallium and its Electrical Properties" (Fujita et al., Journal of Applied Physics, vol. 49, 2010) describes a process for synthesizing a graphene sheet at the interface between solid amorphous carbon and liquid gallium.

European patent application number EP 2412670 A1 describes a method of producing a graphene film that can produce large-area graphene without requiring high temperature.

### SUMMARY OF THE PRESENT INVENTION

Aiming at deficiencies of the prior art, an object of the present invention is to provide a flexible graphene film and a preparation method thereof.

The object of the present invention is achieved by technical solutions as set out in the appended claims. A flexible graphene film comprises multiple folded graphene oxide sheets which are lapped with each other, or comprises multiple folded graphene sheets which are lapped with each other, wherein a crystallinity of the flexible graphene film is lower than 60%.

Beneficial effects of the present invention are as follows. The present invention utilizes the interaction of the good solvent and the poor solvent to construct the graphene film with microscopic and macroscopic multi-stage folds which has excellent flexibility and the resistance to certain stretching and bending. It is tested that the graphene film has a crystallinity of less than 60% or even less than 30%; the graphene film has excellent flexibility, the elongation at break of the graphene oxide film is in a range of 20 to 50%, the elongation at break of the graphene film after reduction is in a range of 15 to 50%, and the conductivity of the graphene film after reduction is in a range of 10000 to 80000 s/m. The flexible graphene film provided by the present invention has great application in the field of flexible electronic devices and the like.

### BRIEF DESCRIPTION OF THE DRAWINGS

Fig. 1 is an analogic map of a crystalline graphene oxide film, an amorphous graphene oxide film, crystalline polymer and amorphous polymer.
Fig. 2 is an XRD diffraction comparison chart of a flexible graphene oxide film and a crystalline graphene oxide film.
Fig. 3 is a mechanical tensile curve of the flexible graphene oxide film.
Fig. 4A is a surface scanning electron micrograph of a graphene film; Fig. 4B is a sectional scanning electron micrographof the graphene film.
Fig. 5 is an XRD diffraction comparison chart of a flexible graphene film and a crystalline graphene film.
Fig. 6A is a mechanical tensile curve of the flexible film and Fig. 6B is a resistance change graph of the flexible film being bent.

### DETAILED DESCRIPTION OF THE PREFERRED EMBODIMENT

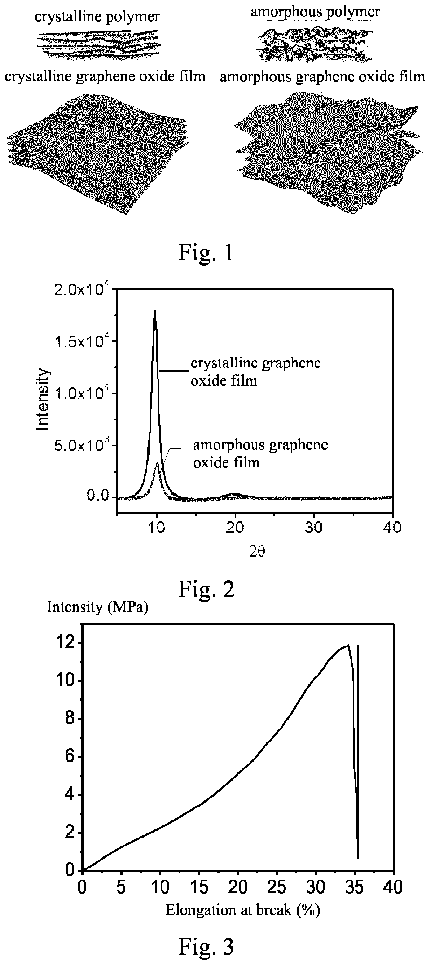

In the present invention, a liquid GO film comprising monolithic graphene oxide with high concentration is placed in a poor solvent for being immersed, a good solvent of the liquid GO film is replaced by the poor solvent, causing that the graphene oxide sheets are shrunk and collapsed, so that the GO sheets are folded and lapped with each other to form a cross-linked network similar to cross-linked polymer, thereby constructing an amorphous GO film, as shown in Fig. 1. Further, during the drying process, the poor solvent is volatilized, and under the action of the capillary, the GO film is refolded macroscopically. These microscopic and macroscopic multi-stage folds give the graphene film excellent flexibility and resistance to certain stretching and bending. After testing, the crystallinity of the graphene film is less than 60%, even less than 30%, and the elongation at break of the graphene film is in a range of 20 to 50%, and further, a super-flexible graphene film is obtained by reduction.

The present invention will be further described with reference to accompanying drawings and embodiments.

### Also disclosed is:

(S1) Cast a graphene oxide solution DMF (N,N-dimethylformamide) with a concentration of 5 mg/mL by a blade, and obtain a liquid graphene oxide film with a thickness of 30 mm;
(S2) Immerse the liquid graphene oxide film obtained by (S1) in a poor solvent ethyl acetate for 6 h, and obtain a self-supporting graphene oxide gel film; and
(S3) Dry the graphene oxide gel film obtained by (S2) through hanging in an oven at 70 °C for 10 h, and obtain a flexible graphene oxide film.

Contrast: the liquid graphene oxide film obtained by (S1) is directly dried at 70 °C for 10 h to obtain a crystalline graphene oxide film.

Fig. 2 shows an XRD diffraction comparison chart which is obvious that the graphene oxide film immersed by the poor solvent has lower crystallinity. The shrinkage folds of the graphene oxide sheets in the poor solvent and the shrinkage caused by the evaporation of the solvent in the process of drying the gel film both cause the macroscopic shrinkage of the graphene oxide film. The regularly stacked graphene oxide film which is not immersed by the poor solvent has a high crystallization peak, which is similar to the crystalline polymer.

### Also disclosed is:

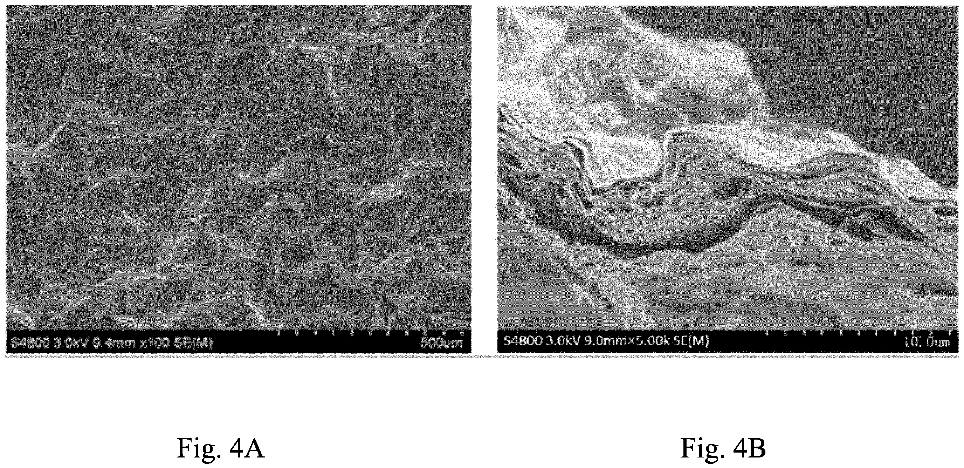

(S1) Cast a graphene oxide solution DMF with a concentration of 10 mg/mL by a blade, and obtain a liquid graphene oxide film with a thickness of 1 mm;
(S2) Immerse the liquid graphene oxide film obtained by (S1) in a poor solvent ethyl acetate for 24 h, and obtain a self-supporting graphene oxide gel film; and
(S3) Dry the graphene oxide gel film obtained by (S2) through hanging in an oven at 70 °C for 10 h, and obtain a flexible graphene oxide film with a crystallinity of 21% and an elongation at break of 35% in a mechanical tensile test, as shown in Fig. 3, no crease is remained after the flexible graphene oxide film is repeatedly folded more than 100,000 times. Fig. 4 is a surface scanning electron micrograph of the graphene oxide film, wherein there are very rich folded structures on the surface of the graphene oxide film, and at the same time, the bending and undulating of the sectional view also shows that the graphene oxide sheets are irregularly stacked. Therefore, it can be known that the graphene oxide film is fully folded from the inside out.

### Also disclosed is:

(S1) Cast a graphene oxide solution N-methylpyrrolidone with a concentration of 15 mg/mL by a blade, and obtain a liquid graphene oxide film with a thickness of 2 mm;
(S2) Immerse the liquid graphene oxide film obtained by (S1) in a poor solvent ethyl acetate for 6 h, and obtain a self-supporting graphene oxide gel film; and
(S3) Dry the graphene oxide gel film obtained by (S2) through hanging in an oven at 80 °C for 15 h, and obtain a flexible graphene oxide film with a crystallinity of 15% and an elongation at break of 40% in a mechanical tensile test, wherein no crease is remained after the flexible graphene oxide film is repeatedly folded more than 100,000 times.

### Also disclosed is:

(S1) Cast a graphene oxide solution N,N-dimethylacetamide with a concentration of 20 mg/mL by a blade, and obtain a liquid graphene oxide film with a thickness of 3 mm;
(S2) Immerse the liquid graphene oxide film obtained by (S1) in a poor solvent ethyl acetate for 15 h, and obtain a self-supporting graphene oxide gel film; and
(S3) Dry the graphene oxide gel film obtained by (S2) through hanging in an oven at 90 °C for 10 h, and obtain a flexible graphene oxide film with a crystallinity of 16% and an elongation at break of 50% in a mechanical tensile test, wherein no crease is remained after the flexible graphene oxide film is repeatedly folded more than 100,000 times.

### Also disclosed is:

(S1) Cast a graphene oxide solution DMF with a concentration of 8 mg/mL by a blade, and obtain a liquid graphene oxide film with a thickness of 0.5 mm;
(S2) Immerse the liquid graphene oxide film obtained by (S1) in a poor solvent ethyl acetate for 2 h, and obtain a self-supporting graphene oxide gel film; and
(S3) Dry the graphene oxide gel film obtained by (S2) through hanging in an oven at 65 °C for 5 h, and obtain a flexible graphene oxide film with a crystallinity of 14% and an elongation at break of 27% in a mechanical tensile test, wherein no crease is remained after the flexible graphene oxide film is repeatedly folded more than 100,000 times.

### Also disclosed is:

(S1) Cast a graphene oxide solution pyridine with a concentration of 14 mg/mL by a blade, and obtain a liquid graphene oxide film with a thickness of 1 mm;
(S2) Immerse the liquid graphene oxide film obtained by (S1) in a poor solvent methanol for 2 h, perform gelation and obtain a graphene oxide gel film; and
(S3) Dry the graphene oxide gel film obtained by (S2) through hanging in an oven at 65 °C for 5 h, and obtain a flexible graphene oxide film with a crystallinity of 59.7% and an elongation at break of 20% in a mechanical tensile test, wherein no crease is remained after the flexible graphene oxide film is repeatedly folded more than 100,000 times.

### Also disclosed is:

(S1) Cast a graphene oxide solution DMF with a concentration of 8 mg/mL by a blade, and obtain a liquid graphene oxide film with a thickness of 2 mm;
(S2) Immerse the liquid graphene oxide film obtained by (S1) in a poor solvent ethyl acetate for 6 h, and obtain a self-supporting graphene oxide gel film;
(S3) Dry the graphene oxide gel film obtained by (S2) through hanging in an oven at 70 °C for 10 h, and obtain a flexible graphene oxide film;
(S4) Place the flexible graphene oxide film obtained by (S3) in a hydroiodic acid aqueous solution and then heat at 85 °C for 6 h, perform reduction and obtain a reduced graphene film; and
(S5) Place the reduced graphene film in ethanol at 60 °C for 30 min, wash away residual hydriodic acid in the reduced graphene film, naturally dry, and obtain a flexible graphene film.

Contrast: the liquid graphene oxide film obtained by (S1) is directly dried at 70 °C for 10 h to obtain a graphene oxide film, and then the graphene oxide film is reduced as same as the steps of (S4) and (S5) mentioned above.

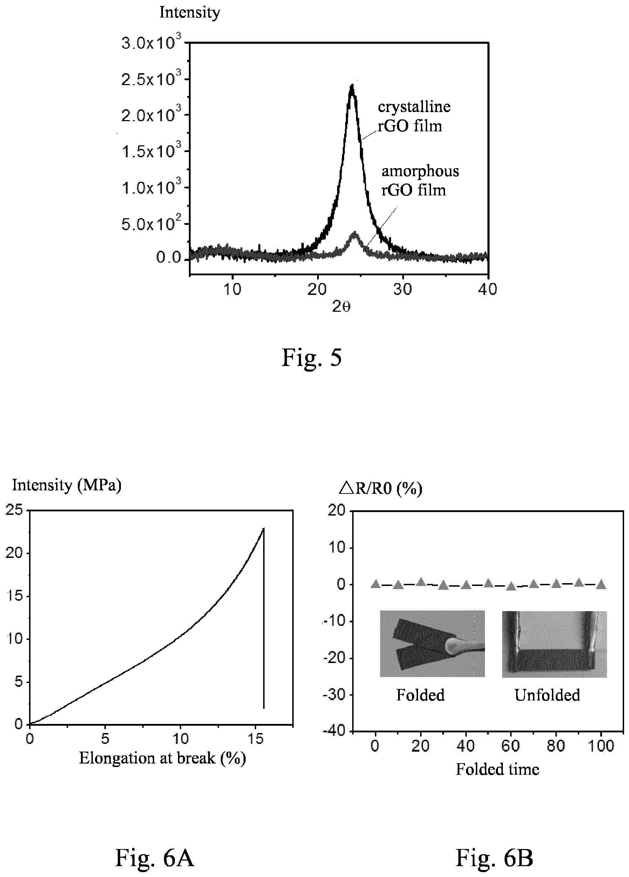

Fig. 5 shows an XRD diffraction comparison chart which is obvious that the graphene film immersed by the poor solvent has low crystallinity. The shrinkage folds of the graphene sheets in the poor solvent and the shrinkage caused by the evaporation of the solvent in the process of drying the gel film both cause the macroscopic shrinkage of the graphene film. The regularly stacked graphene film which is not immersed by the poor solvent has a high crystallization peak, which is similar to the crystalline polymer.

### Also disclosed is:

(S1) Cast a graphene oxide solution DMF with a concentration of 5 mg/mL by a blade, and obtain a liquid graphene oxide film with a thickness of 1 mm;
(S2) Immerse the liquid graphene oxide film obtained by (S1) in a poor solvent ethyl acetate for 4 h, and obtain a self-supporting graphene oxide gel film;
(S3) Dry the graphene oxide gel film obtained by (S2) through hanging in an oven at 70 °C for 10 h, and obtain a flexible graphene oxide film;
(S4) Place the flexible graphene oxide film obtained by (S3) in a hydroiodic acid aqueous solution and then heat at 85 °C for 6 h, perform reduction and obtain a reduced graphene film; and
(S5) Place the reduced graphene film in ethanol at 60 °C for 3 h, wash away residual hydriodic acid in the reduced graphene film, naturally dry, and obtain a flexible graphene film, wherein there are very rich folded structures on the surface of the graphene film; and at the same time, the bending and undulating of the sectional view also shows that the graphene sheets are irregularly stacked. Therefore, it can be known that the graphene film is fully folded from the inside out. The film has a crystallinity of 23% and an elongation at break of 18% (as shown in Fig. 6A), and no crease is remained after the flexible graphene film is repeatedly folded more than 100,000 times. The graphene film has little change in electrical resistance during the bending process, as shown in Fig. 6B, and its conductivity is 41,000 s/m.

### Also disclosed is:

(S1) Cast a graphene oxide solution N-methylpyrrolidone with a concentration of 15 mg/mL by a blade, and obtain a liquid graphene oxide film with a thickness of 2 mm;
(S2) Immerse the liquid graphene oxide film obtained by (S1) in a poor solvent ethyl acetate for 6 h, and obtain a self-supporting graphene oxide gel film;
(S3) Dry the graphene oxide gel film obtained by (S2) through hanging in an oven at 80 °C for 15 h, and obtain a flexible graphene oxide film;
(S4) Place the flexible graphene oxide film obtained by (S3) in a hydroiodic acid aqueous solution and then heat at 80 °C for 7 h, perform reduction and obtain a reduced graphene film; and
(S5) Place the reduced graphene film in ethanol at 60 °C for 30 min, wash away residual hydriodic acid in the reduced graphene film, naturally dry, and obtain a flexible graphene film with a crystallinity of 17% and an elongation at break of 31%, wherein no crease is remained after the flexible graphene film is repeatedly folded more than 100,000 times. The flexible graphene film has little change in electrical resistance during the bending process, and its conductivity is 35,000 s/m.

### Also disclosed is:

(S1) Cast a graphene oxide solution Pyridine with a concentration of 14 mg/mL by a blade, and obtain a liquid graphene oxide film with a thickness of 1 mm;
(S2) Immerse the liquid graphene oxide film obtained by (S1) in methanol for 2 h, perform gelation and obtain a self-supporting graphene oxide gel film;
(S3) Dry the graphene oxide gel film through hanging in an oven at 65 °C for 5 h, and obtain a flexible graphene oxide film; and
(S4) Perform electroreduction on the flexible graphene oxide film obtained by (S3), and obtain a flexible graphene film with a crystallinity of 59.7% and an elongation at break of 15%, wherein no crease is remained after the flexible graphene film is repeatedly folded more than 100,000 times.

## Claims

1. A preparation method of a flexible graphene oxide film, which comprises steps of:
(S1) dispersing graphene oxide in a good solvent, obtaining a graphene oxide solution with a concentration in a range of 5-40 mg/mL, casting film using a blade, and obtaining a liquid graphene oxide film, wherein the good solvent is at least one member selected from a group consisting of N,N-dimethylformamide, water, N-methylpyrrolidone, acetone, dimethyl sulfoxide, pyridine, dioxane, N,N-dimethylacetamide, tetrahydrofuran and ethylene glycol;
(S2) immersing the liquid graphene oxide film in a poor solvent for 1 to 24 h, and obtaining a graphene oxide gel film, wherein the poor solvent is at least one member selected from a group consisting of ethyl acetate, dichloromethane, alkanes, methanol, ethanol, n-butanol, ethylene glycol, propylene glycol, glycerol, isobutanol, methyl acetate, butyl acetate, and acetic acid; and
(S3) drying the graphene oxide gel film, wherein the graphene oxide gel film is dried at 50-100 °C in an oven , and obtaining the flexible graphene oxide film,
and wherein a thickness of the liquid graphene oxide film is in a range of 0.5 to 30 mm, and the casting film using a blade is performed at a speed in a range of 1 to 20 mm/s.

## Patentansprüche

1. Ein Herstellungsverfahren für einen flexiblen Graphenoxidfilm, das die folgenden Schritte beinhaltet:
(S1) Dispergieren von Graphenoxid in einem guten Lösungsmittel, Erhalten einer Graphenoxidlösung mit einer Konzentration im Bereich von 5-40 mg/ml, Vergießen des Films unter Verwendung eines Messers und Erhalten eines flüssigen Graphenoxidfilms, wobei das gute Lösungsmittel mindestens ein Element ist, das aus einer Gruppe ausgewählt ist, die aus N,N-Dimethylformamid, Wasser, N-Methylpyrrolidon, Aceton, Dimethylsulfoxid, Pyridin, Dioxan, N,N-Dimethylacetamid, Tetrahydrofuran und Ethylenglycol besteht;
(S2) Eintauchen des flüssigen Graphenoxidfilms für 1 bis 24 h in einem schlechten Lösungsmittel und Erhalten eines Graphenoxidgelfilms, wobei das schlechte Lösungsmittel mindestens ein Element ist, das aus einer Gruppe ausgewählt ist, die aus Ethylacetat, Dichlormethan, Alkanen, Methanol, Ethanol, n-Butanol, Ethylenglycol, Propylenglycol, Glycerol, Isobutanol, Methylacetat, Butylacetat und Essigsäure besteht; und
(S3) Trocknen des Graphenoxidgelfilms, wobei der Graphenoxidgelfilm bei 50-100 °C in einem Ofen getrocknet wird, und Erhalten des flexiblen Graphenoxidfilms,
und wobei eine Dicke des flüssigen Graphenoxidfilms in einem Bereich von 0,5 bis 30 mm liegt und das Vergießen des Films unter Verwendung eines Messers mit einer Geschwindigkeit in einem Bereich von 1 bis 20 mm/s durchgeführt wird.

## Revendications

1. Un procédé de préparation d'un film d'oxyde de graphène souple, qui comprend les étapes :
(S1) de dispersion d'oxyde de graphène dans un bon solvant, d'obtention d'une solution d'oxyde de graphène avec une concentration comprise dans un intervalle de 5-40 mg/mL, de coulage de film en utilisant une lame, et d'obtention d'un film d'oxyde de graphène liquide, où le bon solvant est au moins un élément sélectionné dans un groupe constitué de N,N-diméthylformamide, d'eau, de N-méthylpyrrolidone, d'acétone, de diméthylsulfoxyde, de pyridine, de dioxane, de N,N-diméthylacétamide, de tétrahydrofurane et d'éthylèneglycol ;
(S2) d'immersion du film d'oxyde de graphène liquide dans un solvant médiocre pendant 1 à 24 h, et d'obtention d'un film gélifié d'oxyde de graphène, où le solvant médiocre est au moins un élément sélectionné dans un groupe constitué d'acétate d'éthyle, de dichlorométhane, d'alcanes, de méthanol, d'éthanol, de n-butanol, d'éthylèneglycol, de propylèneglycol, de glycérol, d'isobutanol, d'acétate de méthyle, d'acétate de butyle, et d'acide acétique ; et
(S3) de séchage du film gélifié d'oxyde de graphène, où le film gélifié d'oxyde de graphène est séché à 50-100 °C dans un four, et d'obtention du film d'oxyde de graphène souple,
et où une épaisseur du film d'oxyde de graphène liquide est comprise dans un intervalle de 0,5 à 30 mm, et le coulage de film en utilisant une lame est effectué à une vitesse comprise dans un intervalle de 1 à 20 mm/s.
